(19) **Europäisches Patentamt**
**European Patent Office**
**Office européen des brevets**

(11) **EP 4 687 302 A1**

(12) **EUROPEAN PATENT APPLICATION**

(43) Date of publication:
**04.02.2026 Bulletin 2026/06**

(51) International Patent Classification (IPC):
*H04B 5/26* (2024.01)     *H02J 50/10* (2016.01)
*H04J 11/00* (2006.01)

(21) Application number: **24191901.8**

(22) Date of filing: **30.07.2024**

(52) Cooperative Patent Classification (CPC):
**H04B 5/26; H02J 50/10; H02J 50/12; H02J 50/80; H02J 50/90**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Kurvathodil, Manoj**
**5656 AG Eindhoven (NL)**

• **Görtschacher, Lukas Johann**
**5656 AG Eindhoven (NL)**

(74) Representative: **Krott, Michel**
**NXP B.V.**
**Intellectual Property & Licensing**
**High Tech Campus 60**
**5656 AG Eindhoven (NL)**

Remarks:
Amended claims in accordance with Rule 137(2) EPC.

(54) **WIRELESS CHARGING DEVICE WITH SIGNAL PARAMETER ADJUSTMENT**

(57) There is described a wireless charging device (100), comprising:
i) a transmitter device (110) to wirelessly charge a chargeable device (200) using at least one signal parameter;
ii) a detection device (120)
to detect the presence of a further RF device (150), and

to detect at least one further signal parameter with respect to the further RF device (150); and

iii) an adjustment device to adjust the at least one signal parameter of the charging device (100) with respect to the detected further signal parameter of the further RF device (110).

Fig. 1

EP 4 687 302 A1

**Description**

TECHNICAL FIELD

The present disclosure relates to a wireless charging device comprising a transmitter device to wirelessly charge a chargeable device using at least one signal parameter, a detection device to detect the presence of a further (active) RF device and detect at least one further signal parameter with respect to the further RF device, and an adjustment device to adjust the at least one signal parameter of the charging device with respect to the detected further signal parameter of the further RF device. The disclosure further relates to a wireless charging system and a method of wirelessly charging a chargeable device.

The disclosure may hence relate to the technical field of radio frequency devices, in particular with respect to wireless charging, e.g. with respect to RFID, NFC, or Qi charging applications.

TECHNICAL BACKGROUND

Radio devices are widely used to enable communication between electronic devices. A radio device comprises in general a transmitter and/or a receiver, a matching circuit, and an antenna. While transmitter/receiver are generally formed on a chip (integrated circuit), the matching circuit and the antenna may be realized out of said chip, for example as an antenna device.

A specific example of a radio device may be an RFIC device and/or an NFC device. These devices are used in a variety of applications including, for example, smartcards or smartphones, to establish radio communication with each other by touching them together or bringing them into close proximity, for example within a short distance such as a few meters or only a few millimeters (for wireless charging). Applications include, among others, contactless transactions, data exchange, and simplified setup of more complex communications such as Wi-Fi or Bluetooth. Various other types of communication applications include those between an RFID device, such as an NFC-enabled mobile phone, and another RFID device such as an NFC chip, called a "tag". Some of the applications involving identification products such as smart cards and RFID tags are used in endeavors such as transport (e.g., ticketing, road tolling, baggage tagging), finance (e.g., debit and credit cards, electronic purse, merchant card), communications (e.g., SIM card for GSM phone), and tracking (e.g., access control, inventory management, asset tracking).

In a wireless charging (WLC) scenario, a charging device (a poller device) is used to charge a chargeable device (a listener device) using radio frequency signals. It is a common case that a further wireless charging device (a further poller device) will be present in the proximity of the charging device and being in operation, i.e. charging a further chargeable device (a further listener device).

However, it can be shown that the presence of the further charging arrangement (further charging device(s) and further chargeable device(s)) can lead to interferences with the charging arrangement (charging device and chargeable device). Specifically, the interference between the charging devices may result in a beat frequency due to carrier frequency mismatch. This beat frequency could lead for example to communication errors on the charging device side or an over-voltage event on the chargeable device side. Moreover, it can also be shown that, even with frequency coherent systems, a certain carrier phase relation between the charging devices could lead to a reduced voltage on the chargeable devices side and hence a lower overall system efficiency.

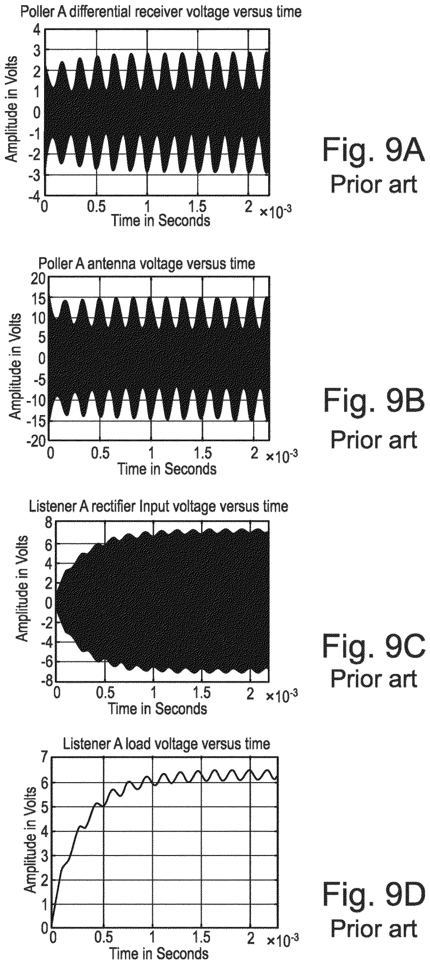

**Figures 9A to 9D** illustrate the impact of frequency/phase mismatch to a charging device and a corresponding chargeable device in a conventional wireless charging scenario. The x-axis shows the time in seconds, while the y-axis shows the amplitude in volts.

Figure 9A: impact of frequency mismatch on the receiver input (differential receiver voltage) of the charging device produces a beat frequency which could lead to communication failure.

Figure 9B: impact of frequency mismatch on the antenna output (antenna voltage): the power transfer efficiency is reduced.

Figure 9C: the chargeable device rectifier input voltage in presence of an interfere (by the further RF device): the voltage swing on the rectifier input would cause over-voltage events on chargeable device side impacting system level performance.

Figure 9D: ripples in chargeable device load voltage can be observed due to inference from the further RF device, likely leading to longer charging time.

SUMMARY OF THE DISCLOSURE

There may be a need to provide efficient and robust wireless charging.

A wireless charging device, a wireless charging system, and a method are provided.

According to an aspect of the present disclosure, it is described a wireless charging device (e.g. a poller, a charging station, etc.), comprising:

> i) a transmitter device (e.g. comprising an antenna and a transmitter block) to wirelessly charge a chargeable device (e.g. a listener, a mobile phone, etc.) using at least one signal parameter (e.g. a frequency, a phase, an amplitude, etc.),
> ii) a detection device (e.g. a frequency measurement device, a phase estimation device, etc.; in particular at least partially coupled with the receiver) (configured) to

>> iia) detect the presence (in the proximity, e.g. in the range 0.3 mm to 3 mm) of a further (active) RF device (e.g. a further charging device; in particular operating in a comparable/similar frequency band) (e.g. a similar or different wireless charging device) (in operation), and
>> iib) detect at least one further signal parameter (e.g. a frequency, a phase, an amplitude, etc.) with respect to the further RF device (in operation), and

> iii) an adjustment device (e.g. a frequency and/or phase adjustment device) to adjust the at least one signal parameter of the charging device with respect to the (corresponding) detected further signal parameter of the further RF device (thereby establishing a co-existence of the operating charging devices).

According to a further aspect of the present disclosure, it is described a wireless charging system (arrangement) comprising: a charging device as described above and at least one of the following: the chargeable device, the further RF device, a further chargeable device.

According to a further aspect of the present disclosure, it is described a method (of operating a wireless charging device for wirelessly charging a chargeable device using at least one signal parameter), the method comprising:

> i) detecting the presence of a further RF device,
> ii) detecting at least one further signal parameter of the further RF device, and
> iii) adjusting the at least one signal parameter of the charging device with respect to the detected signal parameter of the further RF device.

In the present context, the term "presence of a further RF device" may in particular refer to the circumstance that a further RF device is located in proximity of the charging device. The term "proximity" may hereby denote a distance in which the operation of the further RF device may influence (interfere with) the operation of the charging device. In an example of NFC devices, such a distance may be a few millimeters, e.g. 3 mm or lower. However, the presence of a further RF device may not only be a question of distance, but also of the amount of energy coupled from the interfering device.

In the present context, the term "further RF device" may in particular refer to a further radio (frequency) device, for example a further charging device, in particular being in operation/active. In an example, the further RF device operates at least partially in the same frequency band as the charging device, thereby potentially causing interferences.

In the present context, the term "detection device" may in particular refer to a device suitable to detect at least one signal parameter such as a frequency, an amplitude or a phase. For example, a detection device can be implemented as a frequency counter or an amplitude and/or frequency meter. The detection device may be coupled with a receiver device, e.g. at least partially integrated in the receiver device. The detection device may also be coupled with a transmitter device, e.g. when performing a phase sweep to determine a maximum (amplitude iso) phase value for phase determination. The detection device can be further configured to detect the presence of a further RF device, e.g. by measuring a signal characteristic caused by interference, e.g. a beat frequency.

In the present context, the term "adjustment device" may in particular refer to a device suitable to adjust a signal parameter such as a frequency, an amplitude or a phase. For example, the adjustment device may be configured to adapt a carrier frequency of a charging device to a measured carrier frequency of a further RF device. In an embodiment, the adjustment device may be configured as an oscillator with variable frequency.

According to an exemplary embodiment, the invention may be based on the idea that an efficient and robust wireless charging can be enabled, when a charging device detects the presence and at least one signal parameter of a further RF device in the proximity and adjusts its own signal parameter(s) to the detected signal parameter of the further RF device. In this simple and straightforward manner, a stable concurrent charging with multiple charging devices (co-existence) in proximity may be enabled.

The disclosure may lead to robust co-existence between a charging device and a further RF device (multiple wireless charging systems). Further, the disclosure may even enable a higher power transfer efficiency in presence of the further RF device, e.g. using positive interference. Potentially faster charging cycles in comparison to conventional solutions like time domain multiplexed charging may be enabled.

In an exemplary embodiment, the charging device, initiating a WLC session, is sensing the presence of an already active WLC session (with the further RF device) in proximity and readjusting its operating frequency to be frequency coherent to the active WLC session. Having coherent frequency, no beat frequency may be present. Additionally, the charging device transmitter signal phase can be adjusted to achieve constructive superposition (positive interference) at the antenna with the external field generated by the further RF device. The frequency and/or phase of the charging device may be adapted dynamically in real time, where the actual operating conditions such as detuning, coupling, power transfer state and matching component values may be considered.

In an exemplary embodiment, the disclosure describes an approach to measure signal characteristics of an interferer in an RF-based (e.g. NFC) wireless charging scenario and a control mechanism to mitigate the performance regression by adapting charging device parameters.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

EXEMPLARY EMBODIMENTS

According to an embodiment, the signal parameter comprises an operation frequency, in particular a carrier frequency. For example, the carrier frequency of the further RF device can be measured and then, the carrier frequency of the charging device can be adapted to the measured carrier frequency of the further RF device. Thereby, the wireless charging efficiency may be highly improved in an easy and straightforward manner.

According to an embodiment, the detection device comprises a frequency measurement device, in particular a frequency counter. In order to measure the frequency of the external field of the further RF device, the charging device may be equipped with a frequency measurement device such as a frequency meter. Such a device may be implemented in a (cost) efficient manner in existing hardware, for example of the receiver.

According to an embodiment, the signal parameter comprises an operation (signal) phase. For example, the signal phase of the further RF device can be measured and then, the signal phase of the charging device can be adapted to the measured signal phase of the further RF device. Thereby, the wireless charging efficiency may be highly improved in an easy and straightforward manner.

According to an embodiment, the detection device comprises a phase estimation device. In order to measure the phase of the external field of the further RF device, the charging device may be equipped with a phase estimation device. Such a device may be implemented in a (cost) efficient manner in existing hardware, for example (at least partially) of the receiver.

According to an embodiment, the phase estimation device comprises a peak voltage detector to detect a peak voltage (in particular at/in the receiver) (of the further RF device). For example, such a peak voltage detector may be implemented in the receiver of the charging device. Based on a measured peak voltage, it may be determined which phase the further RF device is using.

According to an embodiment, the phase estimation device is configured to perform a phase sweep and to thereby detect/compute the maximum/optimum phase value (e.g. amplitude, voltage, etc.), in particular using the peak voltage detector. By sweeping over a plurality of phases the signal (from the transmitter) of the charging device, it can be detected (e.g. at the peak voltage detector), if a maximum phase value is obtained. In this case, the same phase as the further RF device should be present, so that the phase of the further RF device can be determined.

According to an embodiment, the frequency measurement device and the phase estimation device are combined (at least partially) in a common device, in particular an amplitude and/or frequency measurement device (of the receiver). Implementing both measurement devices in a combined device may save costs, efforts, and space.

According to an embodiment, adjustment of the signal parameter of the charging device, in particular the phase, results in a positive/constructive interference, in particular to detect a phase coherency. The phase/frequency/amplitude of the charging device may be adjusted such that a superposition with the phase/frequency/amplitude of the further RF device is enabled. In case of a positive interference, the charging device signal may be increased.

According to an embodiment, adjustment of the signal parameter of the charging device comprises setting the transmitter frequency of the transmitter device to an external field frequency (of the further RF device). According to an embodiment, adjustment of the signal parameter of the charging device comprises setting the transmitter phase of the transmitter device with respect to the external field phase at the receiver tap point. According to an embodiment, adjustment of the signal parameter of the charging device comprises setting the transmitter amplitude of the transmitter device.

In an embodiment, amplitude adjustment may not be in particular critical. As described in the algorithm section below, the transmitter may generate a signal with an amplitude depending on the before measured amplitude of the coupled signal from the active WLC device in the proximity. This generated signal may then be swept in phase and the tap point voltage may be calculated based on the measured peak voltage in the receiver. The TX phase that is leading to constructive interference at the tapping point (max. voltage) may then be seen as the optimum phase for max. efficiency.

According to an embodiment, detection of the presence of a further RF device comprises at least one of the following: an event-based detection, an interval-based detection, a beat frequency detection, an interference detection. There may be a plurality of options to detect the presence of the (operating) further RF device, in particular detecting if there is a negative influence from the further RF device. For example, the detection of undesired effects such as beat frequency or negative interference may indicate that a further RF device is operating in the proximity and that compensation should be done.

According to an embodiment, the charging device further comprises a receiver device, wherein the detection device is at least partially integrated in the receiver. In this manner, the detection device may be implemented in a cost-effective and space-saving manner in existing structures.

According to an embodiment, at least one device of the wireless charging system is at least one of an NFC device, an UWB device, a mobile phone, a stylus pen, an ear bud. In principle, any wirelessly charging/chargeable electronic device may be applicable. Accordingly, the disclosure may be implemented in a straightforward manner in existing and standardized technology.

According to an embodiment, the following aspects of the disclosure may be of particular interest:

Frequency counter: to measure the external field frequency.
Peak voltage detector: to measure the peak voltage at the receiver input.
Computation of equivalent tapping point voltage versus set transmitter signal phase to determine the phase of the further RF device.

According to an embodiment, there is described the use of a frequency meter in conjunction with a peak voltage detector to dynamically adjust the frequency and phase of the charging device transmitter after detecting the presence of an interferer (further RF device). A control mechanism to adapt the frequency/phase may be computational inexpensive as linear relation between the receiver voltage and external tapping point voltage and peak search method may be used to ascertain the transmitter phase.

In the context of the present document, the term "RFID" (radio-frequency identification) may refer to a technique that uses electromagnetic fields (RF field) to communicate via short distances, in particular 10 meter or less. The term "RFID device" may refer to any device that has an RFID functionality. An RFID device may include an antenna and an integrated circuit with a transmitter and a receiver. A typical RFID system may include an RFID reader and one or more RFID tags which are associated to one or more objects. In an example, a first RFID device comprises a transmitter to transmit the RF signals to a second RFID device, and a receiver, to receive the modulated information of the second RFID device. The standard communication between RFID devices are specified in protocols.

In the context of the present document, the term "NFC" may refer to Near Field Communication which may be a short-range wireless technology (distances measured in centimeters). In order to make two NFC devices communicate, users may bring them close together or even make them touch. NFC may be considered as an established standard. In the present document, the NFC standard may be considered as a special form of RFID. In the context of the present document, the term "NFC device" may refer to any device that has an NFC functionality as described above. An NFC functionality may for example be implemented in a tag, a smart card, a card reader, or a mobile phone.

BRIEF DESCRIPTION OF THE DRAWINGS

Figure 1 illustrates a wireless charging system according to an exemplary embodiment of the disclosure.
Figure 2 shows a flow chart illustrating a method of operating a wireless charging device, according to an exemplary embodiment of the disclosure.
Figures 3A and 3B illustrate a charging device receiver input voltage, with and without adjustment, according to an exemplary embodiment of the disclosure.
Figures 4A and 4B illustrate a charging device transmitter voltage, with and without adjustment, according to an exemplary embodiment of the disclosure.
Figures 5A and 5B illustrate a chargeable device rectifier input voltage, with and without adjustment, according to an exemplary embodiment of the disclosure.
Figures 6A and 6B illustrate a chargeable device load voltage, with and without adjustment, according to an exemplary embodiment of the disclosure.
Figure 7 illustrates in detail an implementation of a wireless charging device, according to an exemplary embodiment of the disclosure.
Figure 8 further illustrates a detail of Figure 7, according to an exemplary embodiment of the disclosure.
Figures 9A to 9D illustrate conventional issues of wireless charging such as interferences and beat frequency.

DETAILED DESCRIPTION OF THE DRAWINGS

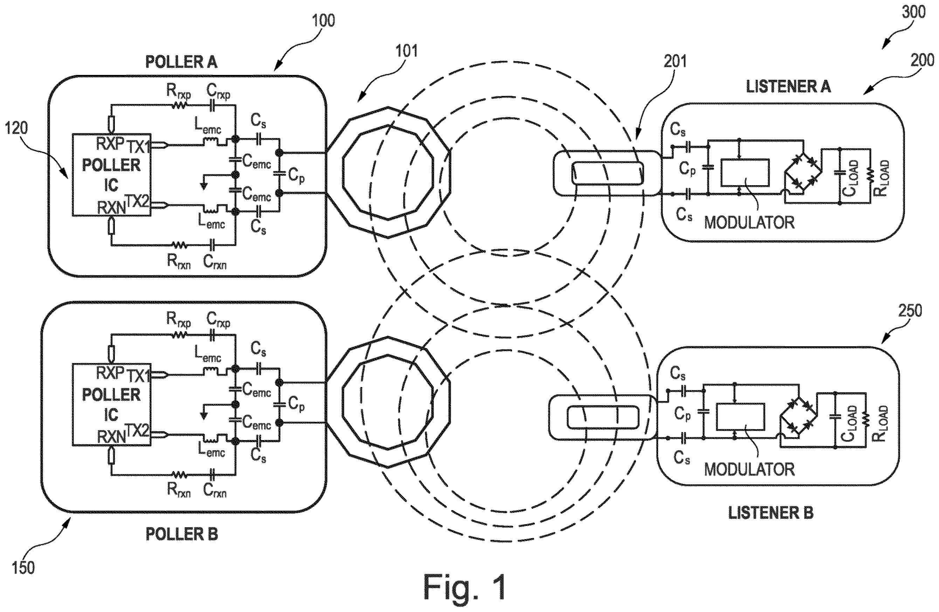

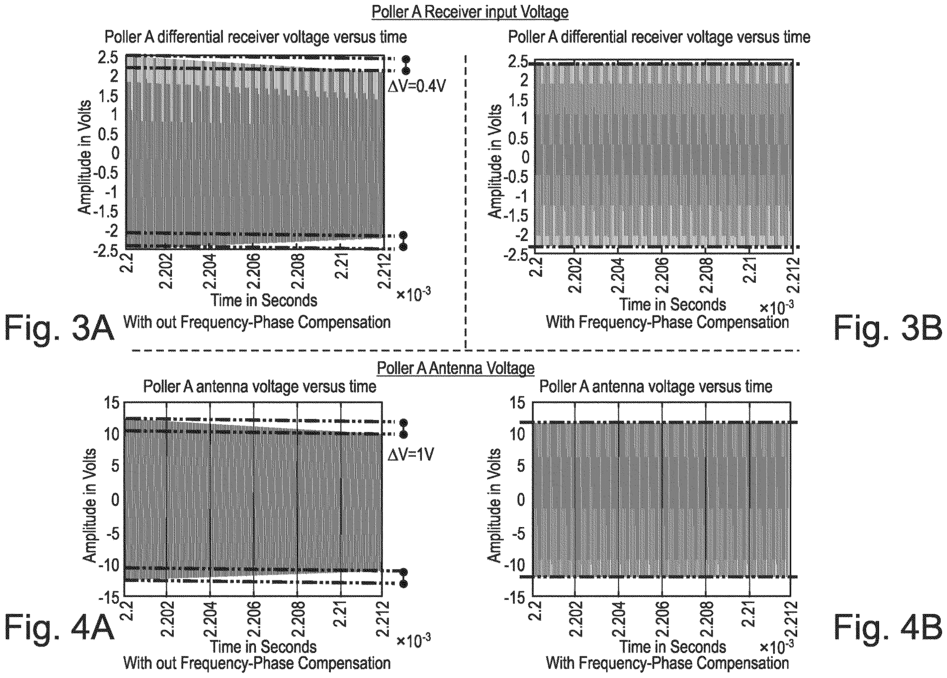

**Figure 1** illustrates a wireless charging system 300 according to an exemplary embodiment of the disclosure. The system 300 comprises a wireless charging device 100 (poller A) with an antenna 101 and transmitter circuitry. The charging device 100 is shown in operation, i.e. charging a chargeable device 200 (listener A) via chargeable device antenna 201, schematically illustrated by a radio frequency field. Further, the system 300 comprises a further RF device 150 (poller B), here a further charging device, in this example similar to the charging device 100. The further RF device 150 is also in operation, i.e. charging a further chargeable device 250, schematically illustrated by a further radio frequency field. The charging device 100, 150 are in proximity with respect to each other, so that the RF field and the further RF field can interfere with each other. In this manner, undesired effects such as beat frequency and over/under-voltage can occur (compare Figures 3A, 4A, 5A, 6A, and 9A to 9D).

The charging device 100 further comprises a detection device 120 to detect the presence of the further RF device 150 in the proximity and to detect at least one further signal parameter with respect to said further RF device 150. The charging device 100 also comprises an adjustment device to adjust the at least one signal parameter of the charging device 100 with respect to the detected further signal parameter of the further RF device 150.

The situation, where poller A is charging listener A and poller B is charging listener B can be described in a simplified manner at the antennas as follows:

$$\text{Poller A} = A1*\sin(\omega 1t+\phi 1)$$

$$\text{Poller B} = A2*\sin(\omega 2t+\phi 2)$$

It can be shown that because of signal frequency difference between the two pollers A and B:

i) beat frequency could lead to communication failure,
ii) beat frequency could lead to over voltage event on listener,
iii) phase difference between two pollers.

A destructive/negative interference would here lead to reduced charging efficiency.

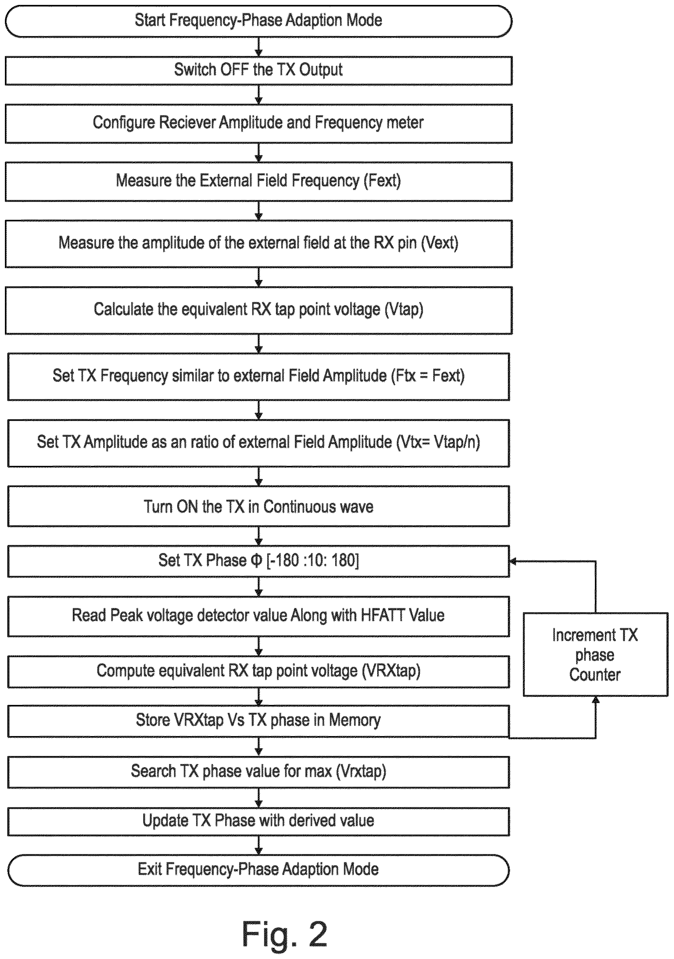

**Figure 2** shows a flow chart illustrating a method of operating a wireless charging device 100 (e.g. as described above), according to an exemplary embodiment of the disclosure. With the frequency/phase adaptation/adjustment/-compensation, the transmitter (TX) signal ("victim") can be shifted to avoid high impact of "aggressor" signals of the further RF device 200.

The frequency/phase adjustment could be performed e.g. either event-based by detecting the presence of a beat frequency (for example by measuring receiver I/Q channel or by receiver mixer DC voltage values) or at periodic time interval by scanning for a presence of interfere.

The method as shown in the flow-chart can be described as follows:

i) a first step would be to switch off the TX signal of the "victim" poller antenna 101 (of the charging device 100) and to configure the frequency and phase meter of the detection device 120.
ii) measure the frequency (Fext) and amplitude (Vext) of the interfering signal (of the further RF device 150), and calculate the equivalent RX tap point voltage.
iii) set the frequency of the TX signal of "victim" (transmitter device of charging device 100) same as the measured external filed frequency and amplitude of the TX signal as a ratio of the calculated external field voltage at the tap point that is Ftx= Fext and Vtx = Vtapext/n.
iv) the transmitter of the charging device is enabled in continuous wave mode. A first value for the TX-phase shift is applied, and the peak voltage at the receiver is measured, equivalent RX tap point (VRXtap) voltage is computed for this TX-phase setting. The computed VRXtap voltage and the TX phase are stored in memory so that it can be accessed later. Then, the next TX-phase shift is applied, and the RX voltage measurement is repeated. In other words, a phase sweep is performed in order to find the optimum phase value.
v) after the VRXtap voltage is computed for all TX phase shifts, a value for the TX-phase shift is chosen which has maximum VRXtap voltage.
vi) the derived TX-phase shift value and TX frequency is set in Firmware (FW).

**Figures 3A and 3B** illustrate a charging device 100 receiver input voltage, with and without adjustment, according to an exemplary embodiment of the disclosure. The x-axis shows the time in seconds, while the y-axis shows the amplitude in volts.

Figure 3A: without frequency-phase adjustment/compensation, the receiver voltage shows a variation of around 0.4 V.

Figure 3B: with frequency-phase adjustment, the receiver input voltage is constant over time, leading to robust communication, and higher power transfer efficiency.

**Figures 4A and 4B** illustrate a charging device 100 transmitter/antenna voltage, with and without adjustment, according to an exemplary embodiment of the disclosure. The x-axis shows the time in seconds, while the y-axis shows the amplitude in volts.

Figure 4A: without frequency-phase adjustment/compensation, the antenna voltage shows a variation around 1 V.

Figure 4B: with frequency-phase adjustment, the antenna voltage is constant over time, leading to robust communication, and higher power transfer efficiency.

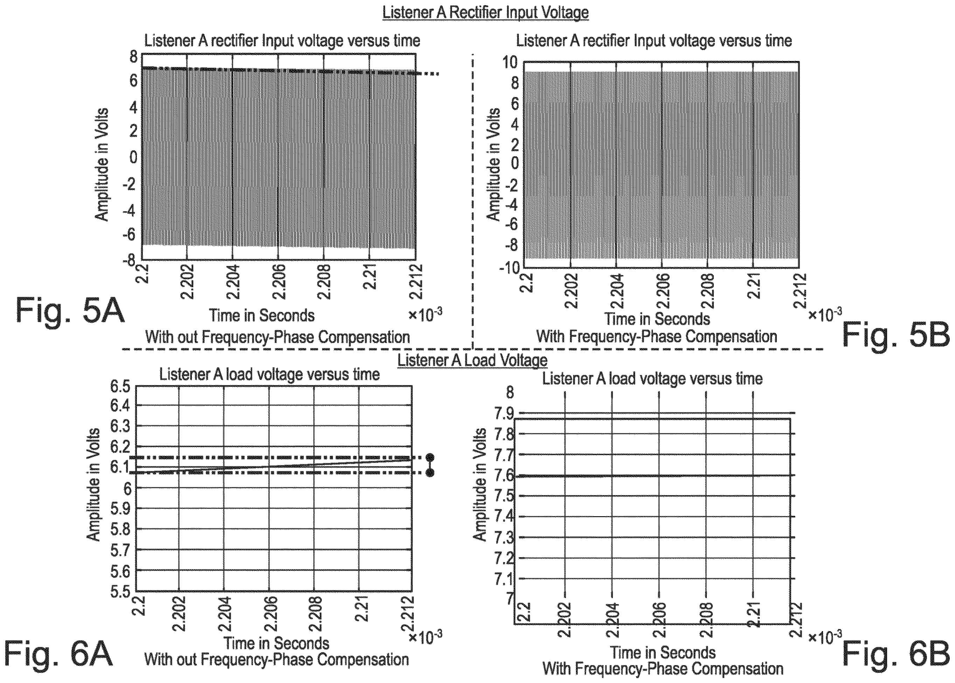

**Figures 5A and 5B** illustrate a chargeable device 200 rectifier input voltage, with and without adjustment, according to an exemplary embodiment of the disclosure. The x-axis shows the time in seconds, while the y-axis shows the amplitude in volts.

Figure 5A: without frequency-phase adjustment/compensation, the rectifier input voltage is comparably low.

Figure 5B: with frequency-phase adjustment, the rectifier input voltage is stable and comparably high.

**Figures 6A and 6B** illustrate a chargeable device 200 load voltage, with and without adjustment, according to an exemplary embodiment of the disclosure. The x-axis shows the time in seconds, while the y-axis shows the amplitude in volts.

Figure 6A: without frequency-phase adjustment/compensation, the load voltage is low (around 6.1 V). The charging device might increase its output power which then might lead to an over-voltage event, if the chargeable device voltage is not constant over time.

Figure 6B: with frequency-phase adjustment, there are no over-voltage events on the chargeable device side, and the higher load voltage of 7.6 V leads to shorter charging time.

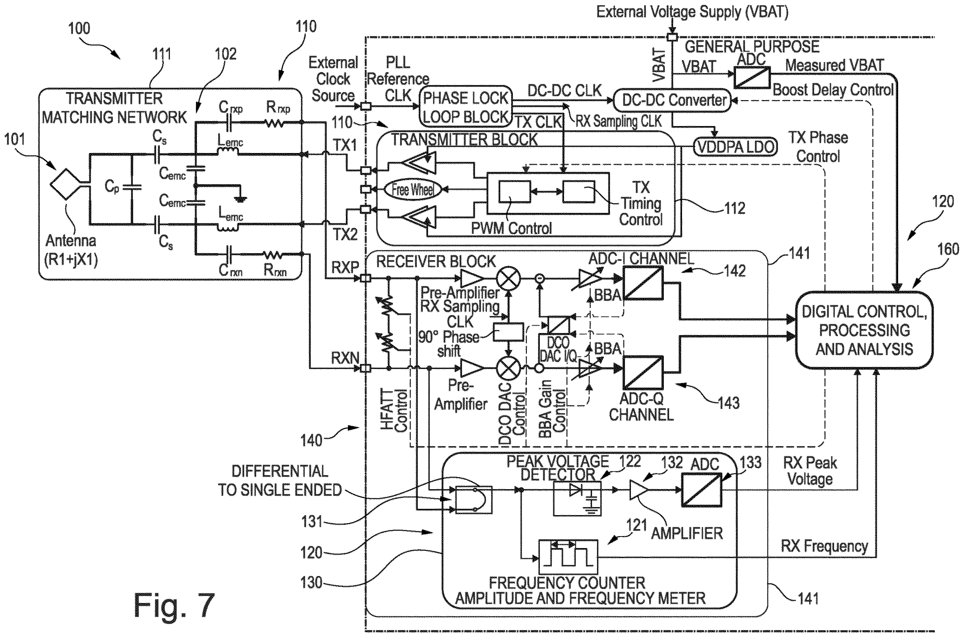

**Figure 7** illustrates in detail an implementation of a wireless charging device 100, according to an exemplary embodiment of the disclosure. The wireless charging device 100 is implemented as an NFC device here and comprises essentially a transmitter device 110 and a receiver device 140. The transmitter device 110 comprises an antenna 101 and a matching circuit 102 in a transmitter matching network 111. The transmitter device 110 further comprises a transmitter block 112 that comprises the transmitter circuit. The receiver device 140 comprises a receiver block 141 having the receiver circuit, including an I-channel 142 and a Q-channel 143. Said channels 142, 143 are connected to a digital processing unit 160 (digital control, processing and analysis block).

The receiver block 141 further comprises an amplitude and frequency meter 130. In this example, the amplitude and frequency meter 130 comprises a differential to single ended converter 131, coupled to a frequency counter 121, as a frequency measurement device and a peak voltage detector 122 as (part of) a phase estimation device. The peak voltage detector 122 is further connected to an (fixed gain) amplifier 132 and an ADC 133. The output of the phase estimation device (receiver peak voltage) 122 and the output of the frequency counter (receiver frequency) 121 is sent to the digital processing unit 160. Said digital processing unit 160 can perform in an example the computation of frequency and/or phase estimation.

In this example, the digital processing unit/block 160 receives the following input: ADC I and Q channel data, VBAT (external supply voltage) measured via an ADC (GPADC), the measured receiver peak voltage and the measured receiver frequency. From this input, the following output can be provided: attenuator control signal, transmitter phase control, boost delay control.

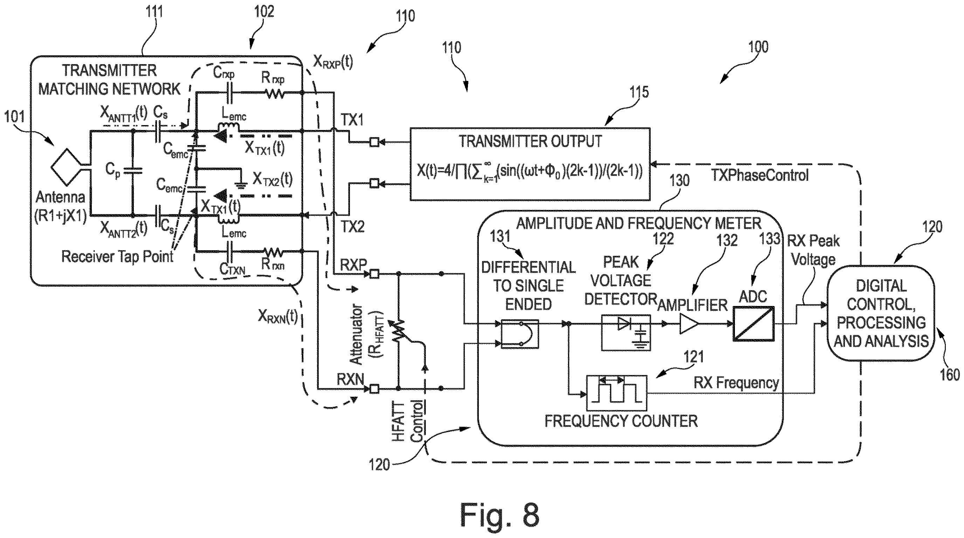

**Figure 8** further illustrates a detail of Figure 7, i.e. the transmitter matching network block 111, the amplitude and frequency meter 130, the digital processing unit 160, and a transmitter output block 115, according to an exemplary embodiment of the disclosure.

In an exemplary example, the operation can be described as follows:

i) X(t) represents the Fourier series of a square wave at transmitter (TX) output with normalized voltage producing a square wave with radial frequency $\omega_1$ and initial phase $\phi_1$.

ii) $X_{TX1}(t)$ and $X_{TX2}(t)$ is the TX signal at the receiver (RX) tap point after the LC filter having cutoff frequency ($\omega t \sim \omega_1$), then

$$X_{TX1}(t) = A1\cos(\omega_1 t + \phi_1)$$

$$X_{TX2}(t) = A1\cos(\Pi - (\omega_1 t + \phi_1))$$

iii) $X_{ANTT1}$ and $X_{ANTT2}$ is the signal from the antenna at RX tap point described as

$$X_{ANTT1}(t) = A2\cos(\omega_2 t + \phi_2)$$

$$X_{ANTT2}(t) = A2\cos(\Pi - (\omega_2 t + \phi_2))$$

iv) Voltage at the RX tap point (Vt), which could be expressed as superposition of $X_{ANTT1-2}$ and $X_{TX1-2}$, that is

$$Vt_{RXP}(y,t) = A1\cos(\omega_1 t - k_1 y + \phi_1) + A2\cos(\omega_2 t - K_2 y + \phi_2)$$

$$Vt_{RXN}(y,t) = A1\cos(\Pi - (\omega_1 t - k_1 y + \phi_1)) + A2\cos(\Pi - (\omega_2 t - K_2 y + \phi_2))$$

where $k_1$ and $k_2$ are wave number of $Vt_{RXP}$ and $Vt_{RXP}$ respectively and given by $k = 2\Pi/\lambda$.

v) Assuming, receiver resistor and capacitor are of same value on RXP and RXN meaning Rrxp=Rrxn =Rrx and Crxp =Crxn = Crx, then differential RX voltage

$$X_{RXP}(t) - X_{RXN}(t) = RHF_{ATT}/(RHF_{ATT} + 2(Rrx - jXCrx)) * (Vt_{RXP} - Vt_{RXN})$$

vi) It can be shown that for $\omega_1 = \omega_2$, a constructive inference at the receiver tap point can be achieved for a value of $X_{TX1-2}$ initial phase $\phi_0$.

vii) Then, for a differential matching topology as shown in the Figure 8, the phase relation between the RX taping point and the antenna could be estimated.

Reference signs

| | |
|---|---|
| 100 | Charging device |
| 101 | Antenna |
| 102 | Matching circuit |
| 110 | Transmitter device |
| 111 | Transmitter matching network |
| 112 | Transmitter block/circuit |
| 115 | Transmitter output |
| 120 | Detection device |
| 121 | Frequency measurement device, frequency counter |
| 122 | Peak detector, part of phase estimation device |
| 130 | Amplitude and frequency meter |
| 131 | Differential to single ended converter |
| 132 | Amplifier |
| 133 | Analog/digital converter |
| 140 | Receiver device |
| 141 | Receiver block/circuit |
| 142 | I-channel |
| 143 | Q-channel |
| 150 | Further RF device |
| 160 | Digital processing unit |
| 200 | Chargeable device |
| 201 | Chargeable device antenna |
| 250 | Further chargeable device |
| 300 | Charging system |

**Claims**

1. A wireless charging device (100), comprising:

   a transmitter device (110) to wirelessly charge a chargeable device (200) using at least one signal parameter;

a detection device (120)

to detect the presence of a further RF device (150), and
to detect at least one further signal parameter with respect to the further RF device (150); and

an adjustment device to adjust the at least one signal parameter of the charging device (100) with respect to the detected further signal parameter of the further RF device (150).

2. The charging device (100) according to claim 1,
   wherein the signal parameter comprises an operation frequency.

3. The charging device (100) according to claim 1 or 2,
   wherein the detection device (120) comprises a frequency measurement device (121).

4. The charging device (100) according to one of the preceding claims,
   wherein the signal parameter comprises an operation phase.

5. The charging device (100) according to one of the preceding claims,
   wherein the detection device (120) comprises a phase estimation device.

6. The charging device (100) according to claim 5,
   wherein the phase estimation device comprises a peak voltage detector (122) to detect a peak voltage.

7. The charging device (100) according to one of claims 5 and 6,
   wherein the phase estimation device is configured to perform a phase sweep and to thereby compute the optimum phase value.

8. The charging device (100) according to one of the preceding claims,
   wherein the frequency measurement device (121) and the phase estimation device are at least partially combined in a common device.

9. The charging device (100) according to one of the preceding claims,
   wherein adjustment of the phase of the charging device (100) results in a constructive interference to detect a phase coherency.

10. The charging device (100) according to one of the preceding claims,
    wherein adjustment of the signal parameter of the charging device (100) comprises at least one of the following:

    set the transmitter frequency of the transmitter device (110) with respect to an external field frequency;
    set the transmitter amplitude of the transmitter device (110) with respect to the external field amplitude;
    set the transmitter phase of the transmitter device (110) with respect to the external field phase at the receiver tap point.

11. The charging device (100) according to one of the preceding claims,
    wherein detection of the presence of the further RF device (150) comprises at least one of the following: an event-based detection, an interval-based detection, a beat frequency detection, an interference detection.

12. The charging device (100) according to one of the preceding claims, further comprising:
    a receiver device (140), wherein the detection device (120) is at least partially integrated in the receiver device (140).

13. A wireless charging system (300), comprising:
    a wireless charging device (100) according to one of the preceding claims;
    and at least one of the following:

    the chargeable device (200);
    the further RF device (150);
    a further charging device (150);
    a further chargeable device (250).

14. A method of operating a wireless charging device (100) for wirelessly charging a chargeable device (200), using at least one signal parameter, the method comprising:

> detecting the presence of a further RF device (150);
> detecting at least one further signal parameter of the further RF device (150); and
> adjusting the at least one signal parameter of the charging device (100) with respect to the detected signal parameter of the further RF device (150).

15. A computer program product, comprising instructions which, when the program is executed by a computer, cause the computer to carry out the method according to one of the preceding claims 1 to 12.

**Amended claims in accordance with Rule 137(2) EPC.**

1. A wireless charging device (100), comprising:

> a transmitter device (110) to wirelessly charge a chargeable device (200) using at least one signal parameter;
> a detection device (120)
>
>> to detect the presence of a further RF device (150), and
>> to detect at least one further signal parameter with respect to the further RF device (150);
>
> an adjustment device to adjust the at least one signal parameter of the charging device (100) with respect to the detected further signal parameter of the further RF device (150);
> wherein the at least one signal parameter comprises an operation phase and/or an operation frequency, and
> wherein the at least one further signal parameter comprises a further operation phase and/or a further operation frequency,
> wherein adjustment of the operation phase of the charging device (100) with respect to the detected operation phase of the further RF device (150) results in a constructive interference to detect a phase coherency, and/or
> wherein adjustment of the operation frequency of the charging device (100) with respect to the detected operation frequency of the further RF device (150) results in a constructive interference to detect a frequency coherency.

2. The charging device (100) according to claim 1,
   wherein the detection device (120) comprises a frequency measurement device (121).

3. The charging device (100) according to claim 1,
   wherein the detection device (120) comprises a phase estimation device to measure the operation phase of the further RF device (150).

4. The charging device (100) according to claim 3,
   wherein the phase estimation device comprises a peak voltage detector (122) to detect a peak voltage of the further RF device (150).

5. The charging device (100) according to claim 4,
   wherein the phase estimation device is configured to perform a phase sweep and to thereby compute the maximum phase value.

6. The charging device (100) according to one of the preceding claims 2 to 5,
   wherein the frequency measurement device (121) and the phase estimation device are combined in a common device.

7. The charging device (100) according to one of the preceding claims,
   wherein adjustment of the signal parameter of the charging device (100) to achieve constructive superposition with an external field generated by the further RF device (150) comprises at least one of the following:

> set the transmitter frequency of the transmitter device (110) with respect to the external field frequency;
> set the transmitter amplitude of the transmitter device (110) with respect to the external field amplitude;
> set the transmitter phase of the transmitter device (110) with respect to the external field phase at a receiver tap point.

8. The charging device (100) according to one of the preceding claims, wherein detection of the presence of the further RF device (150) comprises at least one of the following: an event-based detection, an interval-based detection, a beat frequency detection, an interference detection.

9. The charging device (100) according to one of the preceding claims, further comprising: a receiver device (140), wherein the detection device (120) is at least partially integrated in the receiver device (140).

10. A wireless charging system (300), comprising: a wireless charging device (100) according to one of the preceding claims; and at least one of the following:

    the chargeable device (200);
    the further RF device (150);
    a further charging device (150);
    a further chargeable device (250).

11. A method of operating a wireless charging device (100) for wirelessly charging a chargeable device (200), using at least one signal parameter, the method comprising:

    detecting the presence of a further RF device (150);
    detecting at least one further signal parameter of the further RF device (150);
    adjusting the at least one signal parameter of the charging device (100) with respect to the detected signal parameter of the further RF device (150); and
    wherein the at least one signal parameter comprises an operation phase and/or an operation frequency and wherein the at least one further signal parameter comprises a further operation phase and/or a further operation frequency, and
    wherein adjustment of the operation phase of the charging device (100) with respect to the detected operation phase of the further RF device (150) results in a constructive interference to detect a phase coherency, and/or wherein adjustment of the operation frequency of the charging device (100) with respect to the detected operation frequency of the further RF device (150) results in a constructive interference to detect a frequency coherency.

12. A computer program product, comprising instructions which, when the program is executed by a computer, cause the computer to carry out the method according to claim 11.

Fig. 1

EP 4 687 302 A1

```
                    ┌─────────────────────────────────────────────┐
                    │      Start Frequency-Phase Adaption Mode      │
                    └─────────────────────────────────────────────┘
                                          │
                    ┌─────────────────────────────────────────────┐
                    │           Switch OFF the TX Output            │
                    └─────────────────────────────────────────────┘
                                          │
                    ┌─────────────────────────────────────────────┐
                    │   Configure Reciever Amplitude and Frequency meter   │
                    └─────────────────────────────────────────────┘
                                          │
                    ┌─────────────────────────────────────────────┐
                    │    Measure the External Field Frequency (Fext)    │
                    └─────────────────────────────────────────────┘
                                          │
                    ┌─────────────────────────────────────────────┐
                    │  Measure the amplitude of the external field at the RX pin (Vext)  │
                    └─────────────────────────────────────────────┘
                                          │
                    ┌─────────────────────────────────────────────┐
                    │   Calculate the equivalent RX tap point voltage (Vtap)   │
                    └─────────────────────────────────────────────┘
                                          │
                    ┌─────────────────────────────────────────────┐
                    │  Set TX Frequency similar to external Field Amplitude (Ftx = Fext)  │
                    └─────────────────────────────────────────────┘
                                          │
                    ┌─────────────────────────────────────────────┐
                    │  Set TX Amplitude as an ratio of external Field Amplitude (Vtx= Vtap/n)  │
                    └─────────────────────────────────────────────┘
                                          │
                    ┌─────────────────────────────────────────────┐
                    │        Turn ON the TX in Continuous wave       │
                    └─────────────────────────────────────────────┘
                                          │
                    ┌─────────────────────────────────────────────┐◄─────────────┐
                    │         Set TX Phase Φ [-180 :10: 180]        │              │
                    └─────────────────────────────────────────────┘              │
                                          │                          ┌────────────┴────────┐
                    ┌─────────────────────────────────────────────┐ │   Increment TX      │
                    │  Read Peak voltage detector value Along with HFATT Value  │ │     phase           │
                    └─────────────────────────────────────────────┘ │    Counter          │
                                          │                          └────────────┬────────┘
                    ┌─────────────────────────────────────────────┐              │
                    │   Compute equivalent RX tap point voltage (VRXtap)   │              │
                    └─────────────────────────────────────────────┘              │
                                          │                                       │
                    ┌─────────────────────────────────────────────┐              │
                    │       Store VRXtap Vs TX phase in Memory      │──────────────┘
                    └─────────────────────────────────────────────┘
                                          │
                    ┌─────────────────────────────────────────────┐
                    │       Search TX phase value for max (Vrxtap)      │
                    └─────────────────────────────────────────────┘
                                          │
                    ┌─────────────────────────────────────────────┐
                    │         Update TX Phase with derived value      │
                    └─────────────────────────────────────────────┘
                                          │
                    ┌─────────────────────────────────────────────┐
                    │       Exit Frequency-Phase Adaption Mode       │
                    └─────────────────────────────────────────────┘
```

# Fig. 2

## Poller A Receiver input Voltage

Poller A differential receiver voltage versus time

Fig. 3A With out Frequency-Phase Compensation

Poller A differential receiver voltage versus time

With Frequency-Phase Compensation Fig. 3B

## Poller A Antenna Voltage

Poller A antenna voltage versus time

Fig. 4A With out Frequency-Phase Compensation

Poller A antenna voltage versus time

With Frequency-Phase Compensation Fig. 4B

## Listener A Rectifier Input Voltage

Listener A rectifier Input voltage versus time

Amplitude in Volts

Time in Seconds

With Frequency-Phase Compensation

## Fig. 5B

Listener A rectifier Input voltage versus time

Amplitude in Volts

Time in Seconds

With out Frequency-Phase Compensation

## Fig. 5A

## Listener A Load Voltage

Listener A load voltage versus time

Amplitude in Volts

Time in Seconds

With Frequency-Phase Compensation

## Fig. 6B

Listener A load voltage versus time

Amplitude in Volts

Time in Seconds

With out Frequency-Phase Compensation

## Fig. 6A

15

Fig. 7

Fig. 8

Poller A differential receiver voltage versus time

Fig. 9A
Prior art

Poller A antenna voltage versus time

Fig. 9B
Prior art

Listener A rectifier Input voltage versus time

Fig. 9C
Prior art

Listener A load voltage versus time

Fig. 9D
Prior art

**EP 4 687 302 A1**

Europäisches
Patentamt
European
Patent Office
Office européen
des brevets

# EUROPEAN SEARCH REPORT

Application Number

EP 24 19 1901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/365138 A1 (MILLER DAVID R [US] ET AL) 17 December 2015 (2015-12-17) <br> * paragraph [0061] * <br> * paragraph [0119] - paragraph [0125] * <br> * paragraph [0157] - paragraph [0166] * <br> * figure 27 * <br> ----- | 1-15 | INV. <br> H04B5/26 <br> H02J50/10 <br> H04J11/00 |
| X | US 2018/041253 A1 (MOONEN OSWALD [NL] ET AL) 8 February 2018 (2018-02-08) | 1,3,5-9, 11-15 | |
| A | * paragraph [0027] - paragraph [0033] * <br> * paragraph [0053] * <br> * figures 1, 6 * <br> ----- | 2,4,10 | |
| | | | TECHNICAL FIELDS SEARCHED (IPC) |
| | | | H04B <br> H04J <br> H02J |

The present search report has been drawn up for all claims

| Place of search | Date of completion of the search | Examiner |
|---|---|---|
| Munich | 14 January 2025 | Toumpakaris, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 24 19 1901

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | Publication date |
|---|---|---|---|
| US 2015365138 A1 | 17-12-2015 | US 2015362333 A1 | 17-12-2015 |
| | | US 2015364799 A1 | 17-12-2015 |
| | | US 2015364945 A1 | 17-12-2015 |
| | | US 2015365135 A1 | 17-12-2015 |
| | | US 2015365136 A1 | 17-12-2015 |
| | | US 2015365137 A1 | 17-12-2015 |
| | | US 2015365138 A1 | 17-12-2015 |
| | | US 2015365737 A1 | 17-12-2015 |
| | | US 2017125758 A1 | 04-05-2017 |
| | | US 2018130984 A1 | 10-05-2018 |
| | | US 2018248413 A1 | 30-08-2018 |
| US 2018041253 A1 | 08-02-2018 | CN 107689818 A | 13-02-2018 |
| | | EP 3280060 A1 | 07-02-2018 |
| | | US 2018041253 A1 | 08-02-2018 |

For more details about this annex : see Official Journal of the European Patent Office, No. 12/82